# EUROPEAN PATENT APPLICATION

(11) **EP 4 141 891 A1**
(43) Date of publication of application: **01.03.2023**
(21) Application number: 21194069.7
(22) Date of filing: 31.08.2021
(51) Int. Cl.: G21F 9/12, G21F 9/10

(54) **A METHOD FOR REDUCING RADIOACTIVITY FROM AN AQUEOUS DISPERSION**

(71) Applicant: EPSE Oy, 33470 Ylöjärvi (FI)
(72) Inventor: Rissanen, Vesa, FI-33800 Lempäälä (FI)
(74) Representative: Berggren Oy

(57) **Abstract**

The present disclosure provides a method for reducing radioactivity from an aqueous dispersion, the method comprising providing a dispersion comprising one or more radioactive substances, providing a first metal, a second metal and a boron compound in the dispersion, wherein the first metal is arranged to act as precipitation nuclei for precipitating the second metal as a metal borate, wherein the precipitation nuclei are formed in a previous precipitation reaction either i) by first precipitating the first metal into metal hydroxide at a first pH to form precipitation nuclei, which takes place at a lower pH than the hydroxide precipitation of the second metal, and/or ii) by adding a metal borate of the first metal to act as precipitation nuclei, providing the pH of the dispersion at an initial pH, providing alkali to increase pH of the dispersion, allowing the precipitation nuclei to precipitate the second metal as a borate at a higher second pH, and allowing the second metal borate to act as precipitation nuclei for precipitating at least the first metal as a metal borate, to precipitate and/or coprecipitate the one or more radioactive substances.

## Description

### Field of the application

The present application relates to a method for reducing radioactivity from an aqueous dispersion.

### Background

The universe has formed in the Big Bang. Already after several minutes there existed nuclei of lighter elements in the universe. About three quarters were hydrogen and one quarter was helium, but also a small amount of lithium existed.

The stars were formed in subsequent fusion reactions. Elements from carbon to iron are derived therefrom. Also elements heavier than iron are originated from stars, but they are not based on fusion reactions but neutron capture chain, wherein a nucleus absorbs a neutron and decays by emitting an electron. At the same time one of the neutrons is turned into a proton, and an element next in atomic number is formed. The elements are ejected into space in supernova explosions. Also the substances that make the living and inanimate matter in Earth are derived from these violent actions.

Also elements lighter than carbon, such as boron and beryllium, are not products of fusion reaction but are ejected into space in the supernova explosions. Beryllium and boron are formed in the interstellar space when heavier nuclei decay by the cosmic radiation.

Said neutron was found on 1932 when it was found out that by bombing beryllium with helium nuclei, i.e. alpha particles, particles smaller than atom with mass but without electric charge were separated from the sample.

A radionuclide, which may be also called radioactive nuclide, radioisotope or radioactive isotope, is an atom that has excess nuclear energy, making it unstable. This excess energy can be used in one of three ways: emitted from the nucleus as gamma radiation; transferred to one of its electrons to release it as a conversion electron; or used to create and emit a new particle (alpha particle or beta particle) from the nucleus. During those processes, the radionuclide is said to undergo radioactive decay. These emissions are considered ionizing radiation because they are powerful enough to liberate an electron from another atom.

Radionuclides occur naturally or are artificially produced in nuclear reactors, cyclotrons, particle accelerators or radionuclide generators. All chemical elements can exist as radionuclides. Even the lightest element, hydrogen, has a well-known radionuclide, tritium. Elements heavier than lead, and the elements technetium and promethium, exist only as radionuclides.

Unplanned exposure to radionuclides generally has a harmful effect on living organisms including humans, although low levels of exposure occur naturally without harm. The degree of harm will depend on the nature and extent of the radiation produced, the amount and nature of exposure, such as close contact, inhalation or ingestion, and the biochemical properties of the element, an increased risk of cancer being the most usual consequence.

There is a need to reduce radioactivity in a variety of sources, such as bind, separate and remove the radionuclides. There are methods which can neutralize, capture or precipitate certain specific types of radionuclides, but often these methods are very specific and suitable only for a certain type of radionuclide. Often very complex methods and devices are required, which makes eliminating radioactive material vey time consuming, laborious and expensive. In certain methods providing solid precipitates the precipitates however tend to dissolve due to the relatively high solubility of the precipitates. Consequently, when the precipitate is present in a large volume of liquid, for example because of the weather conditions or small concentration, radioactivity and other harmful substances can be released with the liquid into the environment. Certain precipitates may also be poorly separable as such because of their physical properties, for example light weight.

There is a need for simple and inexpensive methods which could be used for a variety of types of radioactive substances from various sources. It is desired to solve the problems discussed herein.

### Summary

In the present invention it was found out that boron compounds can be used to remove or reduce the amount of any radioactive isotopes. Without binding to a theory, it is believed that boron has specific ability to catch neutrons, which facilitates the process. Boron can be used to precipitate and/or coprecipitate the radioactive isotopes. With the present method most or all of the drawbacks of the prior art can be overcome.

The present application provides a method for reducing radioactivity from an aqueous dispersion, such as from a solution, the method comprising
- providing a dispersion comprising one or more radioactive substances, preferably the dispersion having a radioactivity above a predetermined threshold,
- providing a first metal, a second metal and a boron compound in the dispersion, wherein the first metal is arranged to act as precipitation nuclei for precipitating the second metal as a metal borate, wherein
- the precipitation nuclei are formed in a previous precipitation reaction either
   i) by first precipitating the first metal into metal hydroxide at a first pH to form precipitation nuclei, which takes place at a lower pH than the hydroxide precipitation of the second metal, and/or
   ii) by adding a metal borate of the first metal to act as precipitation nuclei,
- providing the pH of the dispersion at an initial pH of 6 or less, such as setting the pH of the dispersion to an initial pH, optionally by providing acid,
- providing base to increase pH of the dispersion to a final pH,
- allowing the precipitation nuclei to precipitate the second metal as a borate at a higher second pH, and allowing the second metal borate to act as precipitation nuclei for precipitating at least the first metal as a metal borate,
- to precipitate and/or coprecipitate the one or more radioactive substances.

The present application also provides a transportable container comprising
- one or more process containers,
- an inlet for receiving a dispersion,
- an outlet for outputting treated liquid,
- an outlet for outputting formed precipitate,
- one or more controllable means for providing pH adjusting agent to the process container,
- a pH sensor arranged to monitor the pH of the process container,
- a control unit operatively connected to the controllable means for providing pH adjusting agent and to the pH sensor, the control unit being arranged to control addition of the pH adjusting agent as a feedback to pH measured from the process container with the pH sensor to carry out the method.

The main embodiments are characterized in the independent claims. Various embodiments are disclosed in the dependent claims. The embodiments and examples disclosed herein are mutually freely combinable unless otherwise explicitly stated.

The present invention provides a method, which is inexpensive in view of the treatment costs and is very efficient, for treating environmentally hazardous substances including radioactive substances as well as metals, such as heavy metals, into a harmless form.

The process always requires a liquid phase, normally water, in some form. The substance that contains one or more metals to be treated (precipitated) may be a solution, a sludge, or a solid mixture that contains water. If the waste that contains metals is in the form of dry solids, it can be suspended in water, or water can be admixed with it to increase the water content. For any of these mixtures which can be called a process mixture, conditions can be provided under which the precipitation nuclei are formed in the process mixture itself, or they can be introduced from the outside, as mentioned above.

It is possible to treat such solutions or dispersion wherein the content of the radioactive substances and/or metals is very low, such as waste waters from nuclear power plant, contaminated seawater and the like. It is also possible to treat water which is high in salts, such as seawater. This may be the case especially with nuclear power plants which are often close to sea because sea water is used for cooling. One example of presently known dilute radioactive source is the contaminated waters from Fukushima nuclear power plant, which was damaged by earthquake and tsunami in 2011 and led to a catastrophic failure of cooling system. Currently well over 1 million tons of seawater has been pumped through the damaged units to stop the molten fuel debris from overheating, and pumping continues. The formed contaminated water has been pretreated to remove radioactive material and stored in more than 1000 steel tanks on the site. Release of this still contaminated water into sea has been considered as the activity level is low, but this has been opposed for example by the surrounding countries. The dilute contaminated waste water of Fukushima is an example of source material which is difficult to treat with conventional methods, and which therefore causes problems because it needs to be stored before any decision on the fate of the material is made. However with the present methods also such dilute waste water can be treated efficiently to lower the radioactivity.

The present process can be partly or fully automated, which enables treating the harmful radioactive material safely substantially without human intervention. The process can be carried out in one or more container(s), which can be transported to a location of treatment, which enables providing the process in a variety of locations and treating a variety of source materials with the same method and device setup.

### Brief description of the figures

Figure 1 shows a flowchart of an example of the process
Figure 2 shows an example of a setup of transportable containers. Figure 2A shows a schematic view of a setup of three containers. Figure 2B shows the actual setup transported to a location of use.
Figure 3 shows a 3D view of the exemplary setup of Figure 2
Figure 4 shows an example of a device setup of a system
Figure 5 shows Solution 1 after the test at 14:16
Figure 6 shows Solution 1 after the test at 14:45
Figure 7 shows Solution 1 next day after the test
Figure 8 shows separated first precipitate on filter 1 in a 100 ml jar (before drying)
Figure 9 shows separated second precipitate on filter 2 (before drying)
Figure 10 shows 15 ml samples before (left) and after (right) addition of EPSE chemical
Figure 11 shows a filtered 100 ml filtrate sample
Figure 12 shows dried filter 1 sample in 100 ml jar and in dose speed measurement (13.72 µSv/h)
Figure 13 shows dried filter 2 precipitate on a Petri dish and as folded for gamma spectrometric measurements

### Detailed description

In this specification, percentage values, unless specifically indicated otherwise, are based on weight (w/w). If any numerical ranges are provided, the ranges include also the upper and lower values. The open term "comprise" also includes a closed term "consisting of" as one option.

Nuclear reactions which occur spontaneously are said to be an example of natural radioactivity. There are three naturally occurring radioactive series among the elements in the periodic table. These are known as the uranium series, the actinium series and the thorium series, each named after the element at which the series start (except the actinium series which starts with a different uranium isotope). Each series decays through a number of unstable nuclei by means of alpha and beta emission, until each series end on a different stable isotope of lead.

Not all nuclear reactions are natural. Such non-spontaneous reactions occur when stable isotopes are bombarded with particles such as neutrons. This method of inducing a nuclear reaction to proceed is termed artificial radioactivity. This meant new nuclear reactions, which wouldn't have been viewed spontaneously, could now be observed. Since about 1940, a set of new elements with atomic numbers over 92 (the atomic number of the heaviest naturally occurring element, Uranium) have been artificially made. They are called the transuranium elements.

Therefore the radioactive substances, which can be used as the source of the present method, can be either natural or artificial (also called synthetic or induced), or a combination thereof. Such radioactive substances may be contained in a variety of sources, such as in geological material, such as rocks, sand, and the like, and soil, vegetation, air or other gases, water and in other material obtainable from nature, or the radioactive substances may be contained in waste material, such as nuclear waste, medical waste, waste water, gases and the like. Examples of sources of artificial radiation include medical sources of ionization radiation, nuclear explosion, nuclear power plants and their fuel cycle, and consumer products.

The present method can be used for treating any source of radioactivity, which may be any material containing one or more radioactive isotopes, i.e. radioactive material or radioactive substances, which terms may be used interchangeably herein. The radiation emitted by the radioactive substances may comprise alpha, beta and/or gamma radiation.

It is usually necessary to provide the material to be treated as a dispersion, such as an aqueous dispersion. The dispersion may already exist, such as in the case the material to be treated or neutralized is contained in a water dispersion or solution. In case of dry material or material with high dry matter content, it may be diluted and/or formed into a dispersion, especially into a dispersion with a suitable, *i.e.* a lower, dry matter content, for example by adding water or other suitable liquid. The material to be treated may be called as source. The method may comprise providing a source, which may be source material. It may be necessary to carry out one or more steps of determining the type of source, for example to find out or determine if it contains radioactive substances, and/or to measure and/or determine the level and/or type of radioactivity.

A dispersion is a system in which distributed particles of one material are dispersed in a continuous phase of another material. The two phases may be in the same or different states of matter. A dispersion may be a solution, a colloid or a suspension. A solution describes a homogeneous mixture where the dispersed particles will not settle if the solution is left undisturbed for a prolonged period of time. A colloid is a heterogeneous mixture where the dispersed particles have at least in one direction a dimension roughly between 1 nm and 1 µm or that system discontinuities are found at distances of that order. A suspension is a heterogeneous dispersion of larger particles in a medium. Unlike solutions and colloids, if left undisturbed for a prolonged period of time, the suspended particles will settle out of the mixture. Preferably the dispersion is a water dispersion, i.e. an aqueous dispersion, which may be also called as liquid, mixture, process mixture, solution, or process solution.

The present application provides a method for reducing radioactivity from an aqueous dispersion, such as from a solution, the method comprising
- providing a dispersion comprising one or more radioactive substances, preferably the dispersion having a radioactivity above a predetermined threshold.

The method may comprise examining the source material, such as detecting radioactivity in a source, and based on the result deciding whether or not to carry out the method, and/or determining reaction conditions suitable for the current material. The source material as such may be examined, or a dispersion formed from the material may be examined. The examining may include for example measuring radioactivity level and/or type with a suitable method, such as a radiometric method or a spectrometric method, and with a suitable measuring device, such as a Geiger counter, a pressurized ionization chamber, a dosimeter or the like.

In one embodiment the method comprises first detecting radioactivity level from source material, such as from a or the dispersion, and if a radioactivity level above a predetermined threshold is detected, carrying out the method. In addition the type of radioactivity may also be determined, and is a radioactivity of certain (predetermined) type, such as alpha, beta and/or gamma radiation, is detected, carrying out the method. For example it may be desired to remove gamma radiation. The predetermined threshold and/or type may specify a level of harmful radioactivity and/or classify the material as radioactively contaminated, wherein it is desired to lower the content of radioactivity. The level of radioactivity which needs to be reduced may be determined for example by local and/or international laws, regulations and/or practices. The level of radioactivity may be a level which is higher or substantially higher than general background radioactivity of corresponding material. Therefore it can be estimated if an alleged source contains such level and/or type of radioactivity which should be eliminated. In such way only relevant sources can be treated which saves time, chemicals and money. When a radioactivity level above the predetermined threshold and/or type is detected, it can be known that the source contains at least one type of radioactive isotope. Other methods may be used to further specify the type(s) of isotope(s) and other possible substances contained in the source.

Also the composition of the source can be determined, for example to identify metals present in the source, such as at least one or more metals which can be used in the method, for example one or more metals which can act as a first metal and/or as a second metal. The metal content of the source may be analyzed by using any suitable method. If such metal(s) can be identified in the source, there may not be a need to add corresponding metal(s) to the dispersion. For example if a source is analyzed to contain iron, the iron may be used as the first metal in the method. If the source does not contain such metals, suitable metal(s) can be added. Therefore, it can be determined if the source already contain a first metal and/or a second metal, and if one or more metal(s) should be added. A dispersion obtained from the source can be then provided containing the required metals.

Therefore, the source may contain radioactivity at a level and/or of a type which should be reduced, or the method may comprise deciding if the source contains radioactivity at a level and/or of a type which should be reduced, and in such case carrying out the method. The method may also contain determining any other features discussed herein from the source, and making a decision on carrying out the method and/or any further method step(s) based on the determined feature(s). For example a detected presence of a certain metal may have an impact to the selection of metal(s) to be added to the dispersion, and/or if a metal shall not be added, for example if a certain metal is already present in the dispersion and adding such metal is not required.

The dispersion, which is provided and inputted to the process and/or system may be also called as influent, and the corresponding liquid obtained and outputted from the process and/or the system may be called effluent.

The method comprises providing a first metal, a second metal and a boron compound in the dispersion, or to the dispersion, wherein the first metal is arranged to act as precipitation nuclei for precipitating the second metal as a metal borate. A mixture is obtained, which may be called process mixture. More particularly, the first metal may be arranged to form precipitation nuclei for precipitating the second metal as a metal borate, such as the first metal being in the form of a metal hydroxide or a metal borate. The first metal may be arranged to act, in the form of a metal hydroxide or a metal borate, as precipitation nuclei for precipitating the second metal as a metal borate.

The provided first metal and/or the second metal may be originally contained in the dispersion, or the provided first metal and/or the second metal may be added to the dispersion. In one embodiment one or more of the metals is a non-radioactive metal.

It was found out that it is possible to precipitate and/or coprecipitate one or more radioactive substances (isotopes) by using a boron compound to obtain metal borate precipitation. This requires actively utilizing specific kind of precipitation nuclei for precipitating a second metal as a borate at a higher second pH, so that the precipitation procedure can be controlled. This is achieved by first providing suitable precipitation nuclei to facilitate the precipitation as metal borates.

In general boron is present as a mixture of isotopes ¹⁰B (about 20% by weight, 19.1-20.3% in natural samples) and ¹¹B (about 80% by weight). Without binding to any theory, it is believed that the relatively high content of ¹⁰B isotope may play a role in the present method for enhancing binding of radioactive isotopes.

The boron compound may be any suitable boron compound, which can be used to obtain metal borates. The boron compound may be a suitable hydroxo compound of boron, or a compound that contains boron as an oxo-anion. Examples of the former are acids of boron (oxoacids), particularly boric acid (H₃BO₃). Examples of the latter are borate salts, particularly alkali metal borates, such as borax. Boric acid is the most common acid of boron and an inexpensive precipitation chemical which is capable of forming poorly soluble precipitates with metal hydroxides. Borax (sodium borate), in turn, is a commonly occurring form of boron acting in the same way. Later changes in the conditions, such as changes in the pH, cannot affect the precipitate either, because the metal hydroxides form very permanent precipitates with boron compounds, which precipitates are held together by OH groups. Certain boron compounds, in which the boron is bound to oxygen, tend to form chains or networks enabled by the hydrogen bonds formed by the hydroxy groups. The precipitate is a borate, to which the metal to be separated is bound.

In one embodiment the boron compound comprises borax and/or boric acid. The boron compound may be provided and added as an aqueous solution and/or as solid.

Calculated as elemental boron per metal equivalent, the boron compound may be provided and/or used in a molar ratio between 3:2 and 6:1, such as between 3:2 and 3:1, depending on the desired removal rate and the chemical structure of the precipitate formed. In many cases boron may be used in a molar ratio between 3:1 and 6:1 per bivalent metal.

The method may comprise adding to and/or admixing the boron compound with the dispersion before increasing the pH. The mixing may be carried out with a mixer, and/or the mixing may be achieved otherwise, such as by utilizing and/or providing flow of dispersion or solution. When the boron compound is already present and mixed, such as solubilized, in the dispersion, the reaction may be controlled by controlling the pH, as discussed. This facilitates and simplifies carrying out the process. The dispersion containing the boron compound(s) and optionally a first, a second and/or any further metal(s), may be called a mixture or a reaction mixture.

The metal hydroxide of the metal itself does not act as a precipitation nucleus for borate precipitation for that particular metal. However, a different metal hydroxide can be used as a precipitation nucleus for borate precipitation. Also an already formed metal borate can act as precipitation nucleus, even for the same metal.

It was experimentally confirmed that metal borates cannot be prepared by merely mixing the reagents together, but the conditions of constantly increasing pH is also needed so that the metals first precipitate into hydroxides, each in its specific range for precipitation, and when an introduced boron compound is present in this process, it will adhere to the hydroxides as they are being formed, so that the metal borates are formed by the joint effect of the pH and precipitation nuclei comprising or consisting of the hydroxides or already formed borates.

Therefore, in order to obtain a repeatable and reliable precipitation method for precipitating metal(s) as borates, it is essential to provide precipitation nuclei formed in another precipitation reaction, which are 1) obtained by first precipitating a first metal into metal hydroxide at a first pH, or 2) metal borates of the same or different metal (first, second or a further metal). In the reaction at least a first metal and a second metal are precipitated, but any further metals may be also precipitated using the same principle. The method may therefore comprise allowing a formed metal borate, such as the formed metal borate and/or other metal borate, to act as precipitation nuclei for precipitating one or more further (other) metals as metal borates.

In the process a metal is formed into a solid, practically insoluble precipitate by the combined action of a boron compound and the pH, by utilizing precipitation nuclei formed in another precipitation reaction. This "other precipitation reaction" where suitable precipitation nuclei are formed can be the hydroxide precipitation of another metal, for example in many cases iron, which takes place at a lower pH than the hydroxide precipitation of the metal in question, or, for example in the case of iron, a metal borate already formed. This other precipitation reaction where precipitation nuclei are formed can also take place outside the mixture in which the actual precipitation of the metal to an insoluble form takes place; in this case, the precipitation nuclei obtained, for example borates of the same metal or a different metal, are added to the mixture from the outside.

Therefore the precipitation nuclei are formed in a previous precipitation reaction either
i) by first precipitating the first metal into metal hydroxide at a first pH to form precipitation nuclei, which takes place at a lower pH than the hydroxide precipitation of the second metal, and/or
ii) by adding a metal borate of the first metal to act as precipitation nuclei.

The first metal may be for example iron, which is often available. If iron is not available in the original dispersion, it may be added. Other metals present in the dispersion may also act in the process, depending on the source material, and also other metals may be added if necessary. Suitable metal pairs as first and second metals, or further metals, may be formed and/or provided.

For example, dissolved iron and copper act as a pair in such a way that when copper is present, with increasing pH the copper begins to precipitate as a borate by the effect of iron hydroxide that was formed already at a lower pH. Correspondingly, the precipitation of iron into borate begins by the effect of copper borate. Corresponding pairs of metals or mixtures of several metals, containing iron that forms a hydroxide at the lowest pH, can be used in a corresponding way.

The method comprises providing the pH of the dispersion at an initial pH, such as setting the pH of the dispersion to an initial pH if necessary, optionally by providing acid, such as hydrochloric acid or sulphuric acid. The initial pH is usually the lowest pH of the dispersion during the process.

The initial pH is usually at the acidic range, such as 6 or less, 5 or less, 4 or less, 3 or less, or 2.5 or less, preferably 1 or more, or 2 or more. In one embodiment the initial pH is 2, 2.5, 3 or 4, even 5. In most cases pH 2 or 2.5 is suitable.

The method comprises providing base, such as alkali, to increase pH of the dispersion. The base may be added to the dispersion, for example by adding alkali salt such as NaOH, calcium hydroxide or the like, for example as a solution, such as about 5-50% solution, optionally with mixing, which immediately raises the pH, or the base may be provided in a sustained releasing form, for example as concrete or the like, which releases base or alkali over a period of time. The pH of the dispersion at the beginning is an initial pH, and at the end the pH has been raised to a final pH. Therefore, more particularly the method comprises providing base to increase pH of the dispersion from an initial pH to a final pH.

The method may comprise providing a process mixture with a sufficient quantity of water, adding a boron compound to this mixture, and increasing the pH of this process mixture from an initial pH to a desired value to cause hydroxy precipitation of one or several metals to be treated.

The pH of the dispersion can be monitored by using a suitable pH meter. The base may be added as a feedback to the monitored pH to obtain desired development of pH value. In the process the pH may vary as the reactions proceed, so it is possible that the pH lowers temporarily, but will raise again as more base is added.

In addition to pH also other conditions of the process may be monitored, such as temperature, conductivity, radioactivity, presence of one or more substances, flow rate, mixing rate, and/or any other suitable features. The process may be carried out in a system comprising one or more process container(s), pump(s), mixer(s), sensor(s) and/or meter(s) for measuring said conditions, filter(s), mechanical agitator(s) or moving/transporting means, required actuators and/or other required means and/or devices. The system may include one or more heating and/or cooling means. The system may be partly or fully automated. The system may comprise one or more controlling means such as control unit(s) operatively connected to any of the sensors and/or meters, pumps, mixers, and/or other mechanical means and actuators operating thereof as well as heating and/or cooling means or one or more means for adding a chemical. The system, such as the control unit, may be arranged to control the process as a response to one or more variables or features measured or detected from the system, preferably as a feedback to said variable or features. For example the system may be arranged to maintain a temperature, pH, flow rate, mixing rate, and/or other feature in a desired range and/or change said feature according to needs. For example the system may be arranged to monitor the pH and carry out pH adjustment to obtain desired change in the pH during a desired time, for example by adjusting addition of one or more pH adjusting chemical(s). The means for adding a chemical may comprise a reservoir for the chemical, such as a chemical container for chemical in liquid form or in solid form, connected to a valve allowing flow of chemical to the process. The valve may be operatively connected to the control unit, so that as a feedback to a pH measured from a process container the system may operate the valve to allow addition of a suitable amount of pH adjusting chemical from the chemical reservoir. Other chemical(s) may be added as well using the same principle, such as one or more boron compound(s), one or more metal(s) and/or other required or useful chemicals. Temperature of a process dispersion may be controlled as a feedback to a temperature measured from the dispersion. The control unit may operate one or more of heating and/or cooling means, such as heater(s) and/or cooler(s), which may be located in a process container and/or outside the process container. Similarly the control unit may operate any mixer, pump, valve or other means required to move or transfer the dispersion and/or precipitated matter. The system may comprise means for collecting information from the system, such as the measured information, and to provide the information to another location, for example by using wired and/or wireless connection, i.e. the system may be a networked system. The system may comprise one or more control unit(s) comprising one or more processors, memory, and software configured to carry out one or more operations required to operate the system, such as ones described herein. The system may comprise one or more display(s) arrange to provide information from the process and/or to provide user interface for operating the system, preferably equipped with input means such as touch display, keyboard and/or separate buttons and/or switches. The user interface and/or input means may be also implemented as remote, for example via a network user interface, for example operable from a remote computer. The system may include one ore more camera(s) and/or other imaging means for monitoring one or more parts of the system and/or the state of the system operatively connected to the control unit.

It is also possible to prepare a process mixture in which the pH increases by itself without adjusting the pH from the outside. This may be obtained by mixing the metal precipitate with cement or concrete, such as hydraulic cement. It is thus possible to utilize the reactions of the cement in the formation of very poorly soluble metal borates. When the cement or concrete is hardened, calcium hydroxide is released, the liquid becomes alkaline, and the metals to be treated, such as heavy metals, first turn into hydroxides and then, in time, to borates which are very poorly soluble.

Cements are usually inorganic, often lime or calcium silicate based, which can be characterized as non-hydraulic or hydraulic respectively, depending on the ability of the cement to set in the presence of water. Non-hydraulic cement does not set in wet conditions or under water. Rather, it sets as it dries and reacts with carbon dioxide in the air. It is resistant to attack by chemicals after setting.

Hydraulic cements, such as Portland cement, set and become adhesive due to a chemical reaction between the dry ingredients and water. The chemical reaction results in mineral hydrates that are not very water-soluble and so are quite durable in water and safe from chemical attack. This allows setting in wet conditions or under water and further protects the hardened material from chemical attack.

In one embodiment the method comprises providing hydraulic cement in the dispersion, and increasing the pH by providing alkali as the base as a result of the hardening reaction of the hydraulic cement.

In one embodiment the hydraulic cement is arranged to release lime or bind lime when hardened, or is alkali-activated cement, for example slag cement. Slag cement is a hydraulic cement formed when granulated blast furnace slag is ground to suitable fineness.

In the following, the reactions will be described with reference to concrete that contains cement.

When the concrete is hardened, hydration of Ca silicates takes place; in other words, water in the concrete is decreased by the hardening; at the same time, lime is dissolved from tricalcium silicate (Ca₃S), and this silicate turns into dicalcium silicate (Ca₂S) + Ca(OH)₂.. Later on, the lime will turn into CaCO₃, but this will take decades. By contrast, carbonation occurs relatively quickly on the surface of the concrete by carbon dioxide contained in the atmosphere.

A typical water/cement ratio in concrete is 0.3 to 0.45; ideally it would be 0.24, because this amount of water is taken up by the hydration of cement. With the water/cement ratio of 0.24 it would hardly be possible to make concrete, except with a so-called milling hollow nucleus slab machine. In modern concrete, the cement content is typically 300 kg/m3, and the water/cement ratio is 0.35. According to the standards, the concrete reaches its design strength in 28 days, at a normal temperature of +20°C. Thus, the water uptake for hydration will be about 60% = 0.6 × 0.24 = 0.144 × (0.35 - 0.11) × 300 = 61.8 kg of water per m³ of concrete. The final free water content will be 0.35 - 0.24 = 0.11 × 300 = 33 kg per m3 of concrete. Theoretically, the amount of water is halved. However, there is also the water that was removed by evaporation. Thus, the concentration will increase further. For example, when the dry content of pickling precipitate is typically 11 to 12%, a quantity of 61.8 15 × 1.1 = 68 kg per m³ of precipitate could be easily added per m3 of concrete.

The calculation above was for normal Portland cement. However, for example pickling precipitate contains 88% of water, of which about 30% is acid (HF+ HNO₃), and this acid has to be neutralized with lime released from the concrete or lime to be added separately. Consequently, this water has an acid content of about 18 kg = -300 mol, which has to be neutralized with lime (Ca(OH)₂) in an amount of 150 mol = 11.1 kg. From concrete with a C₃S content of 45%, lime is released in an amount of 33 kg and ~20 kg/m³, in the case of 60% hydration. Even in this respect, it is possible to add 68 kg of oxide precipitate per m³ of concrete, as planned. Furthermore, the precipitate contains heavy metal salts in about 1000 mg/l = 68 g per maximum quantity of precipitate, which is not significant in this calculation.

A large variety of other cements are also known, such as pozzolan cements and super sulphate cements, as well as aluminate cements. An interesting field for the present method is aluminate cements which are used for making fireproof structures (for example, refractory brickwork). The aluminate cements reach their final strength when they are "fired" at a sufficiently high temperature. If they are blended with heavy metals and boron compounds, genuine, completely insoluble metal borates will be obtained.

The pozzolan cements, in turn, are such that they "take in" lime instead of dissolving it in water, like the Portland cements. The pozzolan cements consume water in the same way as the Portland cements; the reaction is CS + Ca(OH)₂→ CS₂ (this notation is the code system used by cement chemists to avoid writing complex chemical formulae).

As the hydration proceeds, the pH gradually turns alkaline, such as up to the value of 11.5. At the pH value of 6.4, the dissolved iron has already been precipitated and binds more water when it is changed to the form of Fe(OH)₂ or Fe(OH)₃. As described above, the iron will first form a precipitation nucleus for the other metals which together with the boron compound form reticulated compounds. These compounds are held together by the hydrogen bond between the -OH groups just in the same way as takes place in paper manufacture, and said reticulate ligands are formed. These ligands are thus quite insoluble after they have been dewatered to a given level.

The final pH is usually at the alkaline range, such as at least 9. In one embodiment the final pH is 10, 11, 11.5 or 12. The first pH, second pH and any other pHs during the process are in the range between the initial pH and final pH. The pH may be raised from 5 to 10, however lower initial and/or higher final pHs may be applied. The pH may be raised from 4 to 11, such as from 4 to 10, from 3 to 11, from 3 to 10, from 2.5 to 11 or from 2.5 to 10, for example. In most cases the pH may be raised from 2 to 10, or from 2.5 to 10, which enables precipitating most of the metals and/or radioactive substances in most sources.

The pH is preferably increased or allowed to increase in a gradually increasing manner so that reactions are allowed to happen at different pHs. Therefore the first and further metals can form suitable precipitates each at their specific pH, so by scanning a suitable pH range with adequate time all the metals available in the dispersion can be preferably precipitated. Therefore a suitable period of time for the pH scan or increase can be selected, for example from second to minutes, for example 10 second, 20 seconds, 30 second, 1 minute, 5 minutes, 10 minutes, 15 minutes, 20 minutes, 30 minutes, or more, such as 1 hour, 2 hours or more, 6 hours or more, or 12 hours or more, depending on the conditions, the type of the source and the content of substances in the source.

In most cases the raise of the pH in the range disclosed herein may take for example 1-120 minutes, such as 10-120 minutes, or 30-120 minutes, for example about 60 minutes. However shorter or longer times may be applied. In one embodiment the method comprises increasing the pH from the initial pH to the final pH for a time of at least 1 minute, such as at least 30 minutes, at least 1 hour or at least 2 hours.

The method comprises allowing the precipitation nuclei to precipitate the second metal as a borate at a second pH, which is higher than the first pH, and allowing the second metal borate to act as precipitation nuclei for precipitating at least the first metal as a metal borate, to precipitate and/or coprecipitate the one or more radioactive substances.

The obtained metal borate precipitates are permanently insoluble, so harmful substances can be immobilized, precipitated and recovered in a stable form without a risk of resolubilizing such substances back to the solution. Therefore the present method is an environmentally safe method. Especially the insoluble borate precipitate or the forming insoluble borate precipitate was found to absorb or bind isotopes, so it is possible to efficiently bind radioactive material from a dispersion, such as from a water solution, and bring it into a safe form, and therefore to purify the dispersion from the radioactivity, and also from metals. This enables treating different kinds of materials and isotopes, providing alpha, beta and/or gamma radiation, so that the same simple and inexpensive method may be applied to a wide variety of materials and situations. There is no need to provide specific or complex device setup for each type of material to be treated, or use different methods.

The radioactive substance may comprise for example one or more of tritium (³H), beryllium-10, carbon-14, fluorine-18, sodium-22, aluminium-26, chlorine-36, potassium-40, calcium-41, chromium-51, manganese-54, iron-55, iron-59, cobalt-57, cobalt-60, zinc-65, krypton-81, strontium-90, molybdenum-99, technetium-99, technetium-99m, silver-105, cadmium-109, iodine-129, iodine-131, barium-133, xenon-135, caesium-137, gadolinium-153, europium-152, iridium-192, thallium-204, bismuth-209, polonium-210, radon-222, thorium-232, uranium-235, uranium-238, plutonium-238, plutonium-239, americium-241, californium-252, or any combination thereof.

Certain specific combinations of radioactive substances that are often present in contaminated liquids from nuclear reactors, such as power plants, include cobalt, iron and chromium, such as cobalt, iron, chromium and nickel, or cobalt, iron, chromium, nickel and silver. It was experimentally confirmed that these combinations of substances can be recovered with the present methods efficiently and without problems. These substances were present in test solutions in chloride form. The results clearly indicate that the present method is especially suitable for treating contaminated waters or other dispersions originated from nuclear reactors and similar sources, wherein the contaminated source may be present as dilute water dispersions or solutions. Other radionuclides present in such contaminated liquids include tritium, caesium and strontium, which can also be treated with the present method and devices.

In one embodiment one or more of the radioactive substances comprises or is at least one of the metals, such as the first metal and/or the second metal, which is precipitated as a metal borate. The metal as discussed herein includes metals, alkaline earth metals, transition elements (so-called metals proper), and post-transition or other metals, as well as at least uranium from the actinides, and semi-metals, such as antimony and arsenic. Under laboratory conditions, with suitable nuclei, surprisingly also arsenic and antimony among the semi-metals were successfully borated. It was experimentally shown that the alkali metals and semi-metals act in the same way as the above-mentioned elements when precipitated. However, permanent insolubility cannot always be achieved for alkali and semi metals, but in some cases the borate precipitate will only remain stable until the conditions are changed. This precipitate can be made more stable in various ways, for example by binding it to gypsum slurry or slag, or by casting it with cement in concrete.

The radioactive substance may be also coprecipitated with the metal borates. This may be the case when the radioactive substance is not a metal or is not contained in a metal compound, or is in such a form that does not properly precipitate as metal borate in the used conditions.

In one embodiment the method comprises coprecipitating one or more of the radioactive substances with one or more of the formed or obtained metal borates. Such radioactive substances or radionuclides may be or comprise non-metallic radioactive substances or radionuclides, such as tritium or iodine, for example.

Tritium is especially problematic radionuclide as it is often present in dilute solutions and the recovery thereof is challenging. With the present method the concentration and the activity of tritium can be lowered or even substantially removed from the source. Also other radionuclides present in dilute solutions, such as in natural waters or other water reservoirs, including seawater, lake water and river water, may be treated.

Sea water is a specific source as it contains remarkable amount of salts and other substances, which could interfere most methods or at least require specific methods or additional method steps, devices and/or reagents, for example to remove the salts. Sea water may have a high salinity of 35 g/kg or more. According to one general example this is caused by chloride (19 g/kg), sodium (11 g/kg), sulphate (3 g/kg), magnesium (1.5 g/kg), calcium (0.4 g/kg), potassium (0.4 g/kg), bicarbonate (0.14 g/kg), bromide (0.07 g/kg) and other minerals including boron (0.36 g/kg). These values may vary according to the sea water source in question and therefore are approximate. In the present case it was found out that even water with such high salinity could be treated without problems. No specific arrangements were required to treat sea water.

With sea water, and in similar way also with other sources containing chlorine-based substances, it is preferable to use chlorine-based acid(s), such as hydrochloric acid, for adjusting the initial pH of the dispersion. For example a pH of 2.7 or less may be used initially. The pH may be raised by using NaOH. At a pH of about 2.8 the first hydroxides are formed and separated. The metal borates are formed in sea water as discussed herein without problems, and the borate already present in the sea water may facilitate the reactions. In sea water it is not desired to use sulphuric acid and lime milk, which may however be useful for other sources as pH adjusting agents, especially in cases wherein the source contains sulphates. Sea water is often used as coolant in nuclear power plants, and therefore nuclear power plant emergencies sometimes result in radioactively contaminated sea water. The present method is therefore ideal for treating such high-volume salty wastewater with relatively low concentration of contaminants.

If the radioactive substance is in a solid source material, the method may comprise providing solid material comprising radioactive substances, and adding water to obtain the dispersion comprising one or more radioactive substances. It may be necessary to use one or more mixer(s) and/or disintegrating device(s), such as grinder(s) or the like, especially if the solid material has a high particle size or is present as rock or the like. It may be desired to solubilize and/or disperse at least part of the radioactive material into the aqueous solution.

In the method a precipitate and supernatant (overflow) are obtained, wherein the precipitate may contain all, substantially all or most metal contaminants and isotopes, and the supernatant is practically pure, such as pure water or seawater. The overflow or the supernatant, i.e. the obtained liquid wherefrom the contaminants have been removed or reduced, may be called effluent, or purified or treated dispersion, solution or liquid. The term "contaminants" may refer to the radioactive material (isotopes) and/or to applicable metals. The precipitate and the supernatant, or the effluent, are outputted from the process and/or the system wherein the process is carried out, and may be recovered, stored, transported and further processed.

The method or a process utilizing the method can be carried out as a batch process or as a continuous process. These processed can be carried out by using any suitable system described herein, such as a stationary/fixed system or a transportable system.

The batch process may be carried out by starting the process using hydroxy nuclei as preprecipitating nuclei. However the batch process may also be carried out by obtaining the precipitating nuclei by borating. It is also possible to make a decision which option to choose based on the content and/or type of the source material, or other conditions.

The continuous process may be carried out by borating, after the starting phase, continuously new borate nuclei to obtain continuous circulation. The precipitation conditions of the present method are naturally formed and maintained in the continuous process. Especially the continuous method can be carried out in a suitable transportable container, which can be easily transported to a location of use or a location of treatment, for example to a contaminated area. The container may be a transportable container, which may be based on a standard shipping container or on the like container. Such a container may be called an intermodal container, meaning such containers can be used across different modes of transport, such as ships, trails and trucks. Such containers are usually made of steel, and therefore are safe to use with methods involving radioactivity, as the steel prevents at least part of the radiation passing, thus isolating the process from the environment and/or people. One or more transportable containers may be provided. For example one or more process steps may be divided into two or more containers, for practical reasons and/or for safety reasons. The transportable container may contain one or more process containers arranged to receive the aqueous dispersion and for carrying out the method. Similar transportable containers may also be used in the batch process as well.

The process, such as the process carried out in the one or more containers, can be partly or fully automated, and it can be controlled electronically. This may be necessary when treating radioactive materials. Even though human intervention may be required during the process, most of the process, or even substantially the whole process after initial steps, can be carried out in the absence of human operator.

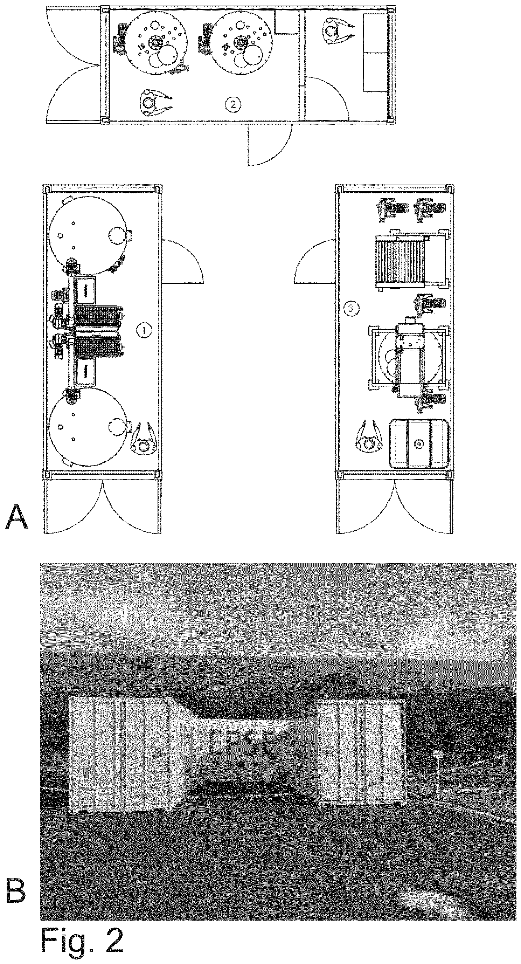

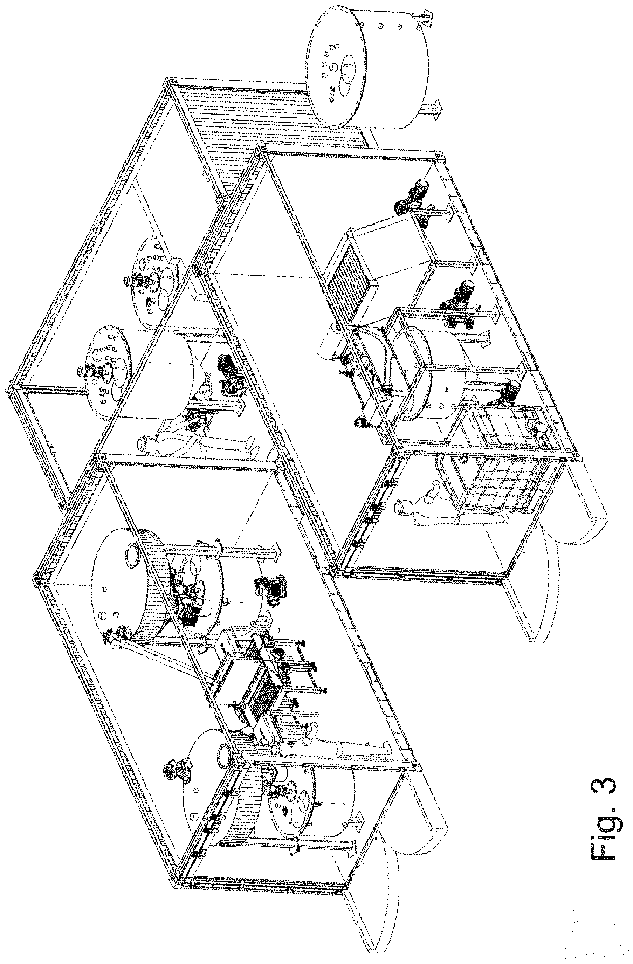

Figures 2 and 3 show an example of a setup of containers, which may be transported to a location of treatment and set to suitable positions and connected together to allow transport of material between two containers. In Figures 2 and 3 there are three containers, wherein Container 1 contains chemical mixing and dosing containers, Container 2 contains process containers S1 and S2, and Container 3 contains a clarifying and filtering container and devices. The containers 1-3 contain process containers, storage container, pumps, mixers, conveyers, filters, clarifying and mixing devices, and connections between the containers (not shown). Human operators are shown in the containers. The containers contain required electrical control means for controlling the process (not shown). The containers may comprise any of the controlling means, actuators, sensors, and operating and controlling means discussed herein, and they may contain a power source and/or they may be connectable to an external power source, to obtain operating power. The system of Figure 2A was implemented in a transportable intermodal container as shown in Figure 2B.

A container or other system setup unit may comprise one or more inlet(s) and outlet(s) for liquid or dispersion, for example an outlet for treated effluent, an inlet for influent (waste water to be treated), an inlet for clean water, an inlet for compressed air, an inlet for acid, an inlet for base, and/or the like, an electricity connection point and any required interconnections between individual units or containers. Outside of such unit there may be one or more container(s) for the treated effluent, which container(s) may be transportable.

The present application provides a transportable container comprising
- one or more process containers,
- an inlet for receiving a dispersion,
- an outlet for outputting treated liquid,
- an outlet for outputting formed precipitate,
- one or more controllable means for providing pH adjusting agent to the process container,
- a pH sensor arranged to monitor the pH of liquid in the process container,
- a control unit operatively connected to the controllable means for providing pH adjusting agent and to the pH sensor, the control unit being arranged to control addition of the pH adjusting agent as a feedback to pH measured from the process container with the pH sensor to carry out the method of any of the preceding claims.

The transportable container may include the process container, or the transportable container may be the process container. In one example the transportable container is a shipping container or the like intermodal container, which may be a standardized container. The transportable container may be the system discussed herein, the system may be part of the transportable container, or the transportable container may be a part of the system. A process container may be a tank, a silo, or the like container.

The container may further include one or more of the parts, functionalities and/or means for providing such functionalities discussed herein, preferably operatively connected to the control unit. For example the process container may comprise one or more mixers for mixing the liquid, one or more pumps, one or more temperature sensors arranged to monitor the temperature of liquid in the process container, one or more conductivity sensors arranged to monitor the conductivity of liquid in in the process container and/or any other applicable sensor arranged so monitor the liquid in the process container. When the liquid in the process container is to be monitored, the sensor in usually located below the surface of the liquid in the container during the process.

The transportable container usually contains said inlet(s) and outlet(s) connected between the one or more process container(s) and the outside of the transportable container. If there are more than one process containers in the transportable container or transportable containers, there may be connections between the process containers allowing flow of liquid and/or recovered material, such as tubes or other applicable conveying, transporting or transferring means.

A process container may comprise means for outputting and/or recovering precipitated material. Such a process container may be the container wherein the precipitation occurs, or it may be a different container whereto the precipitate is conveyed or transferred. The process container may contain an outlet in the bottom of the container, which may be equipped with a controllable valve operatively connected to the control unit for outputting the precipitate. The bottom of the container may be tapered to facilitate the flow of the precipitate, preferably having an operable valve at the tapered end, which therefore forms a funnel shape, such as shown in containers of Figure 3. The container may contain a sensor for monitoring the presence and/or level of the precipitate operatively connected to the control unit. In this way the formation and/or the level of the precipitate can be monitored, and based on this information the precipitate can be outputted, removed and/or recovered when necessary. The container may contain one or more heating and/or cooling means. The container may contain and/or to be connected to one or more source(s) of liquid, such as water or chemical(s), and/or gas, such as air, which sources may be arranged to be controlled by the control unit, for example via a valve. External water, such as tap water or water from other reservoir, even natural water, may be added to the system, for example to prepare required chemical solutions or dilute solution or dispersion, to flush or wash the system or part thereof, such as a container and/or device, and/or for any other applicable purpose. Gas may be provided to aerate liquids, to pressurize any containers, to cause flow of liquid, to flush containers, tubes and/or devices, and/or for any other applicable purposes.

The process container, or an outlet and/or inlet thereof may be connected to a conveying means for conveying liquid and/or solids into and/or from the container, for example to convey the formed precipitate from the container. The conveying means may comprise a conveyer, for example a conveying belt, a bull chain conveyor, a screw conveyor or the like, connected to an actuator operatively connected to the control unit. A container may contain one or more filter(s) for separating solids, and/or one or more blades connected to an actuator operatively connect to the control unit for moving solids, such as the precipitate. A conveying belt or the like conveyer may comprise a liquid-permeable wire or other similar filter allowing liquid to pass and therefore causing dewatering of solids, such as the precipitate, during conveying.

The process container may be a process container wherein the main method steps are carried out, such as the control of the pH and the precipitation. Further (process) containers may be provided wherein other process steps are carried out, such as clarification, preparation of process mixtures or liquids, pre or post processing of mixtures or liquids etc. For example one container may be a chemical mixing and dosing container, a clarifying and/or filtering container, a waste container, an effluent container and/or a storage container, which may be called a collection container or a collection tank. Further containers or reservoirs may be provided, such as one or more containers for acid, for base, for metal and/or for other chemicals required in the process, preferably the containers being arranged to receive and/or contain the material in question in liquid form, preferably equipped with a valve operatively connected to the control unit. It may be also possible to implement one or more of the operations or parts discussed herein as manually operable.

The control unit may comprise software arranged, when executed with a processor in the control unit, to carry out one or more operations to implement the method. For example the control unit, or the software, may be arranged to monitor the pH of the liquid in the process container and as a feedback to the measured pH, carry out one or more adjusting means to control the operation of a valve or other applicable actuator connected to the means for adding a pH adjusting agent to add the pH adjusting agent to the liquid to obtain, maintain and/or raise a desired pH, such as to obtain controlled rise of the pH according to the method. The system or the process container may contain at least two separate controllable means for providing pH adjusting agent to the process container, such as one for adding acid and one for adding base, including containers thereof and corresponding controlling valves. In this way it is possible to obtain both the initial pH and the final pH automatically. In analogous way, means for adding boron compound(s) may be provided and controlled.

The transportable container may contain the control unit, which may comprise a computer, or may be implemented as an embedded system. The control unit may also comprise a remote unit, which is connected to the transportable container, or to other corresponding system wirelessly or by using wires,

The control unit may be arranged to carry out the method as a continuous process and/or as a batch process. Continuous process may be desired in cases wherein the source material is available or provided in large volumes. A suitable method may be selected for each source material and/or case. What is explained for the transportable container herein may be applied to a different system for carrying out the method as well, for example to a stationary or fixed system, or to a different transportable system, which systems may contain same, similar or corresponding parts.

In one embodiment the method comprises
- providing a transportable container, such as one or more transportable container(s), which may be as described in previous,
- carrying out the method as a continuous process in the transportable container. The method may comprise transporting the transportable container to a location of use or a location of treatment, which may be a location containing the source material, such as a location containing radioactively contaminated material and/or radioactive waste. Alternatively the method may comprise carrying out the method as a batch process in the transportable container.

Finally, the method may comprise recovering the precipitated and/or coprecipitated radioactive substances and/or borates, i.e. the recovered material, which is in solid form (solids), preferably transporting the recovered material, optionally further processing the material, and further final disposing the recovered material for example to a permanent repository. The recovering may comprise filtering and/or clarifying, for example by using suitable clarifying chemical(s), if necessary. Any applicable clarifying means can be used, such as a lamella clarifier. Any other suitable recovering means may be used, such as mechanical means and/or conveyers for moving the precipitate, pumps for separating liquid etc. For example water or effluent is separated from the solids, and the solids comprising the radioactive material in metal borate in insoluble form are subjected to final disposal and/or further treatment. Before the final disposal the obtained precipitate may be further processed to isolate the radioactivity, for example by putting into radiation proof containers or covering with concrete.

Precipitate or sludge that contains metal waste may normally be present in two typical phases. In the liquid phase, a ligand-type metal borate precipitate can be isolated from the rest of the phase by separating the overflow and the overflow from each other after the treatment, and recovered. In the solid or solid-type phase, for example as part of soil, gypsum slurry or slag, the separation of the precipitate is possible as well, when the solid phase is first suspended into a suitable liquid phase. It is also possible to use the treated solid phase or the separated borate ligand as such, without suspending, as an ingredient in concrete, and to utilize it in this way. In any case, the borate obtained in this way is insoluble, and for example its storage does not require any particular maintenance measures, for example in view of controlling the pH, or the like.

The ligands formed are characterized by the fact that the heavy metal precipitate and the boron compound together form a product that is tough compared with mere heavy metal precipitate. In tests the boron compound (calculated as boric acid) was used in a molar ratio between 1.5:1 and 2:1 to the metal oxide and/or dissolved metal salt. A typical final compound was, for example, Me[B₃O₄(OH)₃], wherein Me = Fe, Co, Mo, or Ni, or Me₂[B₃O₄(OH)₂]₃, wherein Me = Cr. In many cases it took several hours to form the compounds, and this was seen as a significant increase in the rigidity of the ligand-type paste.

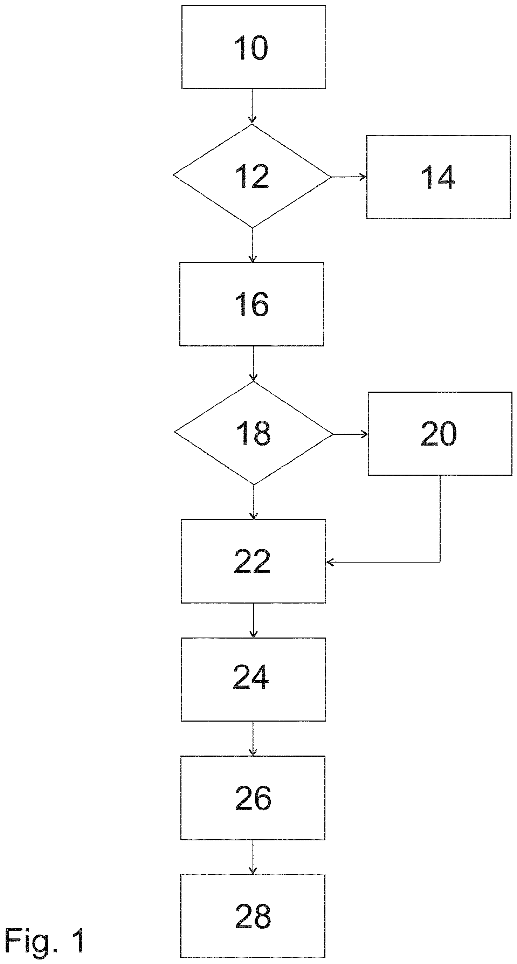

An example of the process described herein is disclosed in the flowchart of Figure 1. Part or all of the process steps of Figure 1 may be carried out and/or combined with other features discussed herein. The method comprises a step 10 of providing source material, which may be provided in or formed into a dispersion form. The source material is examined for radioactivity and based on the level of detected radioactivity and/or the type thereof a decision is made in step 12 whether to carry out the method or not to carry out the method. If a decision is made not to carry out the method, a step 14 is selected meaning that the process is either stopped or a different process, such as a different treatment, is carried out. If a decision is made to continue with the process, it is continued to step 16, wherein the source is analyzed for presence of metals, such as a first metal and/or a second metal. If it is found out that the source does not contain suitable metal(s) for carrying out the method, a decision is made in step 18 to add required first, second and/or further metals in step 20. From step 20 the method can proceed to step 22. If in step 18 it was found out that the source contains required metals, the process may continue directly to step 22.

In step 22 the initial conditions of the source dispersion are formed, including providing a boron compound, if not already provided previously, and bringing the pH of the dispersion to an initial pH at a suitable acidic range by adding a pH adjusting agent, if not already at such a range or level. After the initial conditions are confirmed in step 22, the method may proceed to step 24.

In step 24 the pH is raised with a pH adjusting agent, for example as described in previous. This step is carried out for a suitable time to confirm that the desired precipitates and/or coprecipitates are formed and obtained, resulting in a final pH and a final result of step 26.

In step 26 a result of the process is obtained containing precipitated radioactivity and metals, and a supernatant, which is purified of radioactivity. After this step the precipitate may be recovered in step 28 and transported to a suitable location, for example to be further processed and/or to be transported to a permanent repository.

### Examples

### Example 1

### Precipitation of cobalt

In the example about 50 kBq Co⁶⁰ was precipitated in the presence of cobalt chloride, ferric chloride and EPSE chemical comprising boron compound in an aqueous solution. All the reagents were in chlorine form. The pH was raised with 1M sodium hydroxide until pH 9, the formed precipitate was allowed to settle. The precipitate and supernatant were separated on the next day. The precipitate was dried at 70°C and the activity thereof was measured with gamma spectrometry. Also the activity of the supernatant was determined with gamma spectrometry.

### Materials and methods

pH measurements were carried out by using Thermo Scientific Orion Verstar pro pH meter. The calibration (slope 98.5%) was made by using AVS Titirinorm Buffer solution pH 7.4 and 10, +0.02 at 20°C. For mixing the solution Komet Variomag magnetic stirrer was used. The solution was filtered through Schleicher & Schnell 595 Rundfilter Ø 90 mm filter. The filters were dried in Labnet 311DS thermal cabin at 70°C. The dose measurements were carried out with Mirion RDS-31 radiation survey meter. For gamma spectrometric measurements electrically cooled Mirion Technologies Oy HPGe detector (GC1518) was used and effectively calibrations were carried out by using ISOCS calibration.

The Co⁶⁰ sample was prepared by evaporating 1.5 ml Co⁶⁰ solution at dilute nitric acid into dryness at 70°C and the residue was solubilized in 1 ml strong HCI. The solution was re-evaporated into dryness and the residue was solubilized in 1.5 ml strong HCI. The evaporations were carried out to remove nitrate from the sample and turn the solution into chloride form. The solution thus prepared was analyzed for radioactivity by using gamma spectrometry, and the required amount of Co⁶⁰ activity (50 kBq) was calculated as 1.1 ml.

The sample solution was prepared by adding into deionized water 0.2497 g cobalt chloride, 5 ml ferric chloride, 1.1 ml of the Co⁶⁰ sample and by adding deionized water to obtain 1 liter. The obtained solution was transferred into 2 l decanter and 15 ml was taken to measurements with gamma spectrometry. A 15 ml aliquot of the sample was used. The dose speed measured from the side of the decanter was about 2.5 µSv/h. The measured dose speed outside the hood did not differ from background. The pH of the solution was 1.85 so it was decided not to lower the pH with 1M HCI. The EPSE chemical was added at 10:03, the solution was stirred for 15 minutes, and another 15 aliquot was taken at 10:20. The pH of the solution was 1.79.

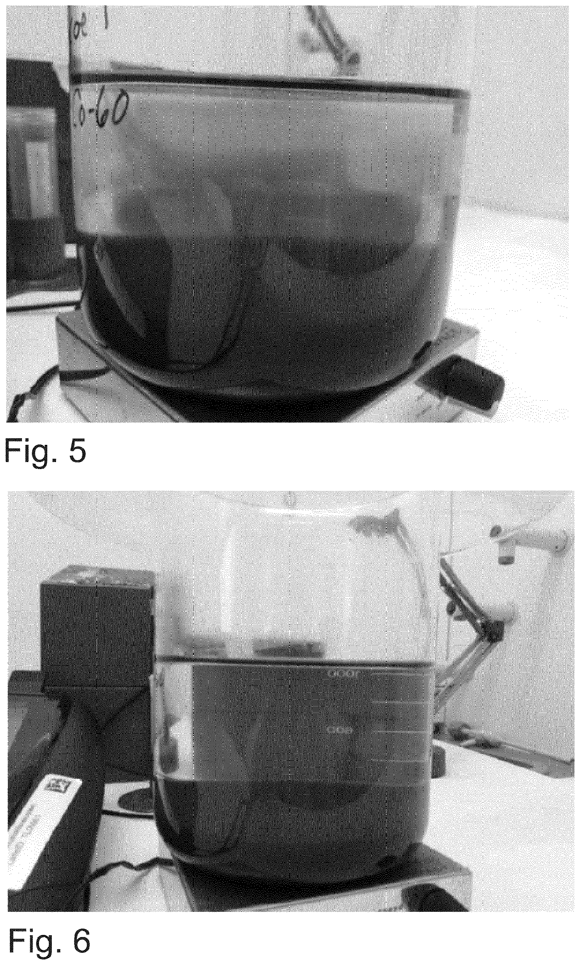

The test was started at 10:27, when the pH of the solution was 1.78. NaOH was added in aliquots in the range of 200-5000 µl, and the pH was monitored. A stabilized pH was obtained after each added NaOH aliquot. At 12:58 minor precipitation was observed at pH 4.49. The final pH 9 was achieved at 14:02, and the stirring was stopped. The final volume of the solution at the end was 100 ml - (2x15 ml) + 85.2 ml (the added NaOH) = 1055.2 ml. Images were photographed from the solution at 14:16 (Figure 5) and 14:45 (Figure 6).

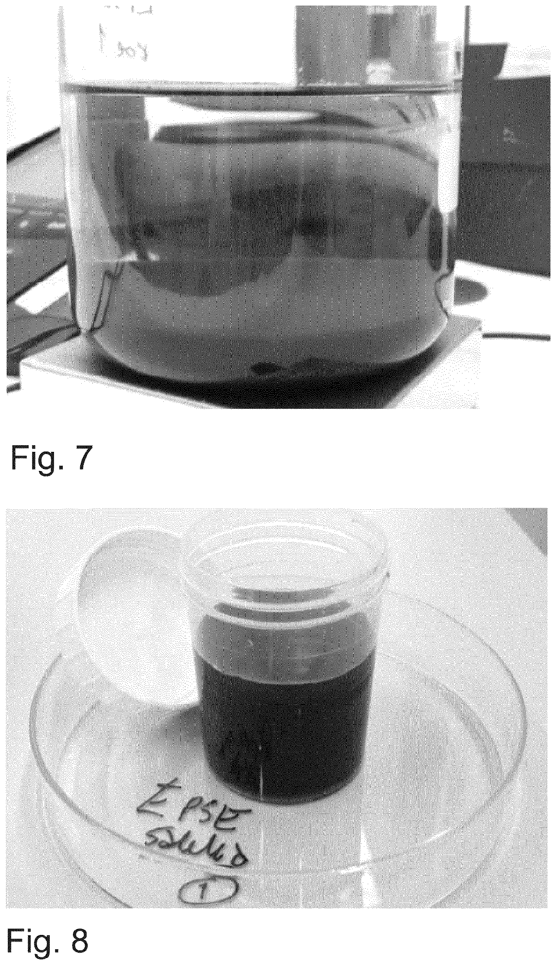

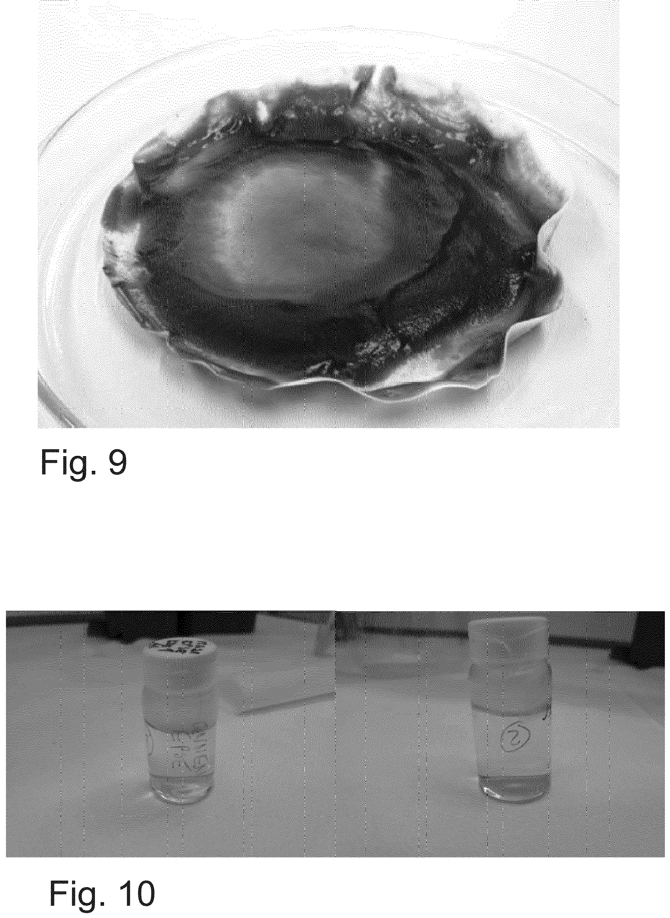

The solution was left to settle until the next day (Figure 7), and the precipitate was separated by filtrating. A large amount of precipitate was obtained and two filters were used for separating it. The first filter with its precipitate (the first precipitate) was transferred into 100 ml jar (Figure 8) and the second filter (the second precipitate) was dried at a glass Petri dish (Figure 9). The dose speed of the first precipitate measured from the side of the jar before drying was about 8.5 µSv/h. The precipitates were dried in a temperature cabinet at 70°C until the weight of the precipitates did not change any more. The weights of the precipitates were measured by weighting. The total weight of the precipitates was 2.7097 g. The dried second precipitate (0.248 g) was taken into gamma spectrometric measurements.

### Gamma spectrometric measurements

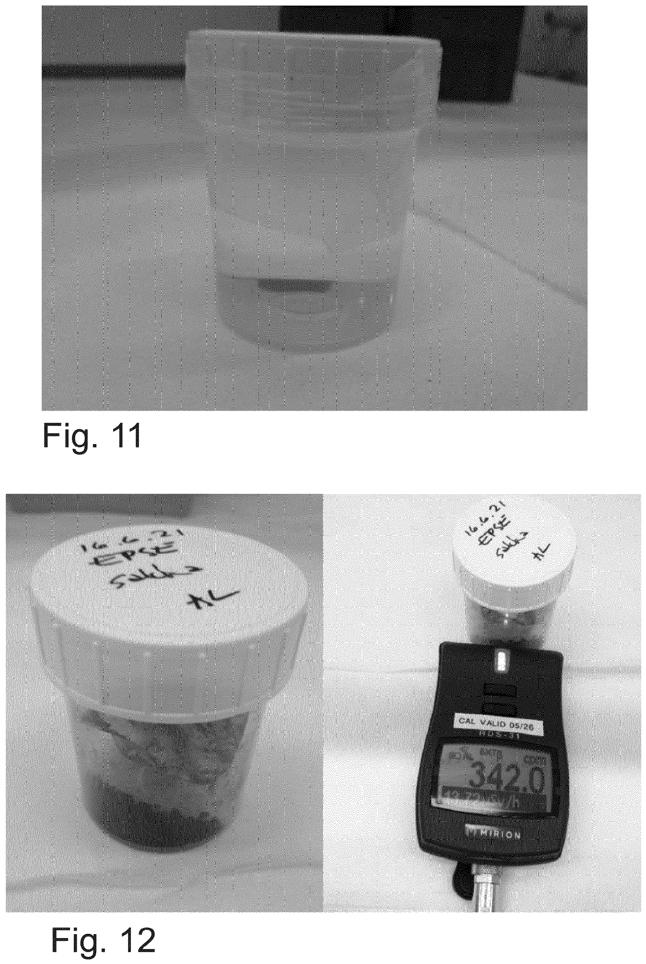

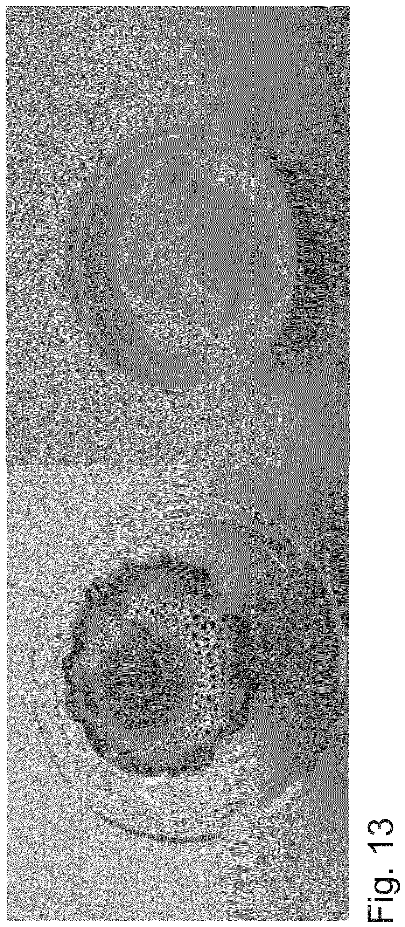

The 15 ml samples taken before and after addition of EPSE chemical are shown in Figure 10. The filtered 100 ml filtrate sample is shown in Figure 11. The dried precipitates on the first and the second filters are shown in Figure 13. The dose speed of the first precipitate was about 14 µSv/h (Figure 12).

The gamma spectrometric measurements were carried out by placing liquid sample at 4 cm distance from the detector. The second precipitate was first folded and attached with a tape onto the cover of a 100 ml jar (Figure 13) and measured a 4 cm distance from the detector.

### Results

The Co-60 activities measured with gamma spectrometry are presented in Table 1. According to the results the total activity of the solution was 33.2 kBq before the addition of EPSE chemical and 33.9 kBq after (the change in the volume caused by the chemical addition is ignored). The measured activities were lower than the planned 50 kBq activity. This may be causes by the chemical lability of the active substance after HCI treatment. The volume of the filtrate after filtration was 1055.2 ml. The total Co-60 activity of the filtrate was 38.9 Bq, which is 0.1% of the original activity. The total weight of the dried precipitate was 2.7097 g. The total activity of the precipitate was 31.6 kBq, which is 96% of the original activity. When the technical uncertainties in the measurement are taken into consideration, it can be concluded that almost all of the Co-60 activity was bound to the precipitate.

**Table 1**

| Sample | Sample volume | Measurement time(s) | Co-60 activity in the sample ±2σ |
|---|---|---|---|
| Solution before addition of EPSE chemical | 15 ml | 75367.2 | 33.2±1.5 Bq/ml |
| Solution after addition of EPSE chemical | 15 ml | 83779.6 | 33.4±1.5 Bq/ml |
| Filtrate | 100 ml | 254261.4 | 0.04±0.003 Bq/ml |
| Precipitate 2 | 0.248 g | 94495.1 | 11655.2±514.6 Bq/g |

### Summary

In the test Co-60 precipitation was tested in a sample solution (Solution 1) wherein Co-60 as the active substance, Co carrier and precipitation nucleus former (ferric chloride) were in chloride form. Boron-containing EPSE chemical was added to the sample solution and after setting into equilibrium the pH of the solution was raised to pH 9 with 1 M NaOH. The formed precipitate was separated by filtrating. The activity measurements of the precipitate and the filtrate showed that almost all the Co-60 activity was contained in the precipitate.

### Example 2

A transportable system was built into three transportable containers. The system comprised
1) a mixing tank (500 l) with dosing pump, tap water infeed and a mixer,
2) H₂SO₄ 10% container with dosing pump,
3) S1 reactor (1.5 m³) with pump for 1 m³/h for infeed and outlet,
4) S2 reactor (1.5 m³) with pump for 1 m³/h for infeed and outlet,
5) Ca(OH)₂ mixing tank (500 l) with dosing pump, tap water infeed and a mixer,
6) lamella clarifier with 2 × 1 m³ pump,
7) belt or press filter with 1 m³ pump,
8) belt or press filter with 1 m³ pump.

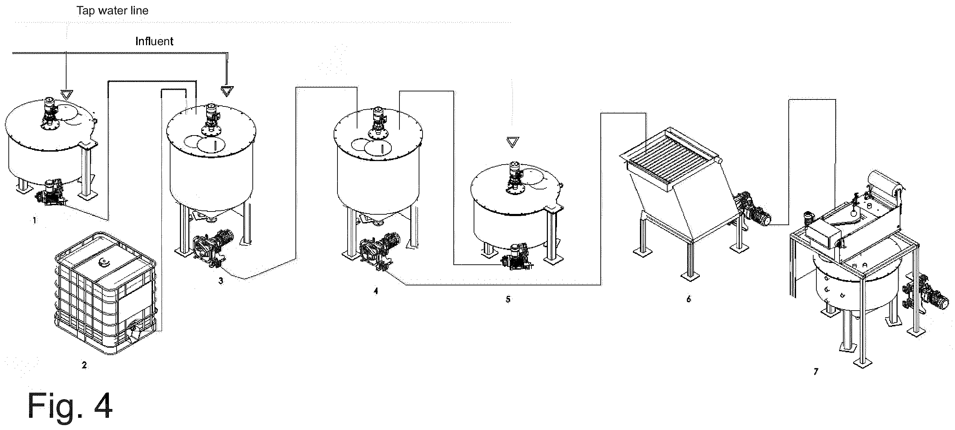

These devices and connections between the devices are depicted in Figure 4, and were included in the system setup built in the three containers disclosed in Figures 2A, 2B and 3. The containers could be transported to a desired location of use and the system was set up by placing the containers into a suitable configuration, by connecting to containers together with tubing and cabling, and by connecting the system to an external power supply and to a water supply. The method could be run at the desired location for the available source material without problems and with high throughput. It was found that infeed rate up to 1500 kg/h could be obtained.

## Claims

1. A method for reducing radioactivity from an aqueous dispersion, such as from a solution, the method comprising
- providing a dispersion comprising one or more radioactive substances, preferably the dispersion having a radioactivity above a predetermined threshold,
- providing a first metal, a second metal and a boron compound in the dispersion, wherein the first metal is arranged to act as precipitation nuclei for precipitating the second metal as a metal borate, wherein
- the precipitation nuclei are formed in a previous precipitation reaction either
i) by first precipitating the first metal into metal hydroxide at a first pH to form precipitation nuclei, which takes place at a lower pH than the hydroxide precipitation of the second metal, and/or
ii) by adding a metal borate of the first metal to act as precipitation nuclei,
- providing the pH of the dispersion at an initial pH of 6 or less, such as setting the pH of the dispersion to an initial pH, optionally by providing acid,
- providing base to increase pH of the dispersion to a final pH,
- allowing the precipitation nuclei to precipitate the second metal as a borate at a higher second pH, and allowing the second metal borate to act as precipitation nuclei for precipitating at least the first metal as a metal borate,
- to precipitate and/or coprecipitate the one or more radioactive substances.

2. The method of claim 1, comprising allowing a formed metal borate to act as precipitation nuclei for precipitating one or more further metals as metal borates.

3. The method of claim 1 or 2, wherein one or more of the radioactive substances comprises or is at least one of the metals, such as the second metal, which is precipitated as a metal borate.

4. The method of any of the preceding claims, comprising coprecipitating one or more of the radioactive substances with one or more of the formed metal borates, such as wherein the radioactive substance comprises or is tritium.

5. The method of any of the preceding claims, comprising increasing the pH from the initial pH to the final pH for a time of at least 1 minute, such as at least 30 minutes, at least 1 hour or at least 2 hours.

6. The method of any of the preceding claims, wherein the initial pH is 2, 2.5, 3, 4 or 5, and/or wherein the final pH is 10, 11, 11.5 or 12.

7. The method of any of the preceding claims, comprising providing hydraulic cement in the dispersion, and increasing the pH by providing alkali as the base as a result of the hardening reaction of the hydraulic cement, preferably wherein the hydraulic cement is arranged to release lime or bind lime when hardened, or is alkali-activated cement, for example slag cement.

8. The method of any of the preceding claims, wherein the boron compound comprises borax and/or boric acid.

9. The method of any of the preceding claims, wherein the radioactive substance comprises one or more of tritium (³H), beryllium-10, carbon-14, fluorine-18, sodium-22, aluminium-26, chlorine-36, potassium-40, calcium-41, chromium-51, manganese-54, iron-55, iron-59, cobalt-57, cobalt-60, zinc-65, krypton-81, strontium-90, molybdenum-99, technetium-99, technetium-99m, silver-105, cadmium-109, iodine-129, iodine-131, barium-133, xenon-135, caesium-137, gadolinium-153, europium-152, iridium-192, thallium-204, bismuth-209, polonium-210, radon-222, thorium-232, uranium-235, uranium-238, plutonium-238, plutonium-239, americium-241, californium-252.

10. The method of any of the preceding claims, comprising first detecting radioactivity level from the dispersion or from source material, and if a radioactivity level above a predetermined threshold is detected, carrying out the method.

11. The method of any of the preceding claims, wherein one or more of the metals is a non-radioactive metal.

12. The method of any of the preceding claims, comprising recovering the precipitated and/or coprecipitated radioactive substances and/or borates, preferably further final disposing the precipitated and/or coprecipitated radioactive substances and/or borates.

13. The method of any of the preceding claims, comprising
- providing solid material comprising radioactive substances, and adding water to obtain the dispersion comprising one or more radioactive substances.

14. The method of any of the preceding claims, comprising
- providing a transportable container, such as one or more transportable container(s),
- preferably the transportable container comprising
- one or more process containers,
- an inlet for receiving a dispersion,
- an outlet for outputting treated liquid,
- an outlet for outputting formed precipitate,
- one or more controllable means for providing pH adjusting agent to the process container,
- a pH sensor arranged to monitor the pH of the process container,
- a control unit operatively connected to the controllable means for providing pH adjusting agent and to the pH sensor, the control unit being arranged to control addition of the pH adjusting agent as a feedback to pH measured from the process container with the pH sensor to carry out the method of any of the preceding claims,
- preferably transporting the transportable container to a location of treatment, and
- carrying out the method of any of the preceding claims in the transportable container, optionally as a continuous process or as a batch process.

15. A transportable container comprising
- one or more process containers,
- an inlet for receiving a dispersion,
- an outlet for outputting treated liquid,
- an outlet for outputting formed precipitate,
- one or more controllable means for providing pH adjusting agent to the process container,
- a pH sensor arranged to monitor the pH of the process container,
- a control unit operatively connected to the controllable means for providing pH adjusting agent and to the pH sensor, the control unit being arranged to control addition of the pH adjusting agent as a feedback to pH measured from the process container with the pH sensor to carry out the method of any of the preceding claims.
